# FASCICULE DE BREVET EUROPEEN

(11) **EP 1 442 795 B1**
(45) Date de publication et mention de la délivrance du brevet: **17.08.2005**
(21) Numéro de dépôt: 04356002.8
(22) Date de dépôt: 09.01.2004
(51) Int. Cl.: B02C 18/30, A47J 43/07

(54) **Boitier avec rangement pour appareil electromenager de preparation culinaire comportant un accessoire de hachage a vis**
GEHÄUSE FÜR EIN HAUSHALTSGERÄT mit Aufbewahrungseinrichtung
HOUSING FOR A HOUSEHOLD APPLIANCE including storage device

(30) Priorité: 23.01.2003 FR 0300696
(43) Date de publication de la demande: 04.08.2004
(73) Titulaire: SEB S.A., 69130 Ecully (FR)
(72) Inventeur: Astegno, Jean Paul, 64420 Espoey (FR); Peyras, Lionel, 65100 Jarret (FR)
(74) Mandataire: Kiehl, Hubert

(56) Documents cités:
- FR-A- 2 767 666

## Description

La présente invention se rapporte au domaine technique général des appareils électroménagers de préparation culinaire comportant un accessoire de hachage à vis.

Les accessoires de hachage à vis comportent un corps creux présentant une ouverture latérale prévue pour l'introduction des aliments ainsi qu'une ouverture axiale prévue pour la sortie des aliments hachés. Une vis d'entraînement des aliments est montée axialement dans le corps creux. Une grille est placée dans l'ouverture axiale. La grille est maintenue par un écrou assemblé de manière démontable sur le corps. Un couteau est monté sur l'axe de la vis entre l'extrémité de la vis et la grille. La vis présente un dispositif d'accouplement prévu pour coopérer avec un dispositif d'entraînement d'un bloc moteur lorsque l'accessoire de hachage est monté sur ledit bloc moteur.

Usuellement plusieurs grilles présentant différentes sections d'ouvertures sont fournies avec l'accessoire de hachage, afin de pouvoir réaliser des préparations hachées plus ou moins finement. D'autres éléments associés accompagnent usuellement l'accessoire de hachage, tels qu'un accessoire complémentaire pour préparer le kébbé, un tube à saucisses, ou encore un pilon prévu pour pousser les aliments dans l'ouverture latérale d'introduction.

Il est connu de réaliser un appareil électroménager de préparation culinaire comportant un boîtier dans lequel est disposé un moteur prévu pour entraîner la vis d'un accessoire de hachage à vis. Le boîtier comporte sur sa face supérieure un logement muni de rainures prévues pour recevoir différentes grilles. Le logement est fermé par un capot amovible.

Il est connu du document FR2 767 666 un appareil électroménager de préparation culinaire prévu pour recevoir un accessoire de hachage à vis comprenant un boîtier comportant une paroi extérieure arrière présentant des évidements délimitant partiellement un espace de rangement prévu pour recevoir un poussoir à viande. La paroi extérieure arrière présente également des dépressions prévues pour recevoir au moins partiellement des grilles. Les dépressions sont ménagées entre la paroi extérieure et l'espace de rangement. Cette disposition permet de loger davantage d'accessoires. Toutefois la réalisation proposée présente l'inconvénient de devoir retirer le poussoir à viande pour pouvoir accéder aux grilles.

L'objet de la présente invention est de proposer un boîtier d'appareil électroménager de préparation culinaire dans lequel le rangement des éléments utilisés avec l'accessoire de hachage à vis est amélioré.

Cet objet est atteint avec un boîtier d'appareil électroménager de préparation culinaire prévu pour recevoir un accessoire de hachage à vis, comportant une paroi extérieure présentant au moins une conformation délimitant partiellement un espace de rangement prévu pour recevoir un premier élément de l'accessoire de hachage à vis, la paroi extérieure présentant une dépression prévue pour recevoir au moins partiellement un deuxième élément de l'accessoire de hachage à vis, la dépression étant ménagée entre la paroi extérieure et l'espace de rangement, du fait que la dépression présente une ouverture supérieure et une ouverture frontale.

En d'autres termes, l'ouverture supérieure est ménagée au-dessus de la dépression, alors que l'ouverture frontale est ménagée dans une paroi latérale de la dépression. Cette disposition permet la mise en place et le retrait de l'élément de l'accessoire de hachage à vis placé dans la dépression par l'ouverture frontale sans affecter le ou les autres éléments placés dans le ou les espaces de rangement délimités partiellement par la ou les conformations. L'ouverture supérieure peut être prévue pour permettre aussi la mise en place et le retrait de l'élément de l'accessoire de hachage à vis placé dans la dépression. L'espace de rangement défini par la ou les conformations permet de ranger un élément de l'accessoire de hachage à vis tel que par exemple une grille. La dépression permet de ranger un autre élément de l'accessoire de hachage à vis, tel que par exemple un tube à saucisses ou un pilon. Deux éléments peuvent ainsi être rangés de manière superposée, lorsque la paroi extérieure appartient à la face supérieure du boîtier, ou l'un derrière l'autre, lorsque la paroi extérieure appartient à une paroi latérale ou à la paroi arrière du boîtier. Cette disposition contribue à la compacité du boîtier. Cette disposition permet également à l'utilisateur de voir ensemble les deux éléments rangés dans le boîtier. Par rapport aux rainures de rangement d'accessoires déjà connues, cette disposition peut être obtenue en modifiant simplement la forme d'une paroi extérieure du boîtier. Une telle construction est donc peu onéreuse à réaliser. La paroi extérieure peut être recouverte par un capot ou par un couvercle.

Selon une forme de réalisation avantageuse, ledit espace de rangement est défini par au moins deux conformations disposées de part et d'autre de la dépression. Cette disposition permet une meilleure visualisation de l'espace de rangement. En alternative, l'élément peut notamment prendre appui contre une paroi latérale de la dépression et être maintenu par la ou les conformations disposées de l'autre côté de la dépression.

La ou l'une des conformations peut former une échancrure dans la paroi latérale de la dépression. Ladite conformation est alors concave. En alternative, une ou plusieurs conformations convexes peuvent notamment être ménagées sur la paroi extérieure à distance de la dépression.

Avantageusement les conformations délimitent partiellement plusieurs espaces de rangement et la dépression est ménagée entre la paroi extérieure et lesdits espaces de rangement. Plusieurs éléments peuvent ainsi être rangés dans les espaces de rangement, par-dessus ou par devant l'élément rangé dans la dépression.

Avantageusement alors, l'ouverture frontale prolonge l'ouverture supérieure. En d'autres termes, l'ouverture supérieure et l'ouverture frontale forment une échancrure dans la paroi extérieure. Cette disposition permet d'offrir plus de liberté pour la mise en place ou le retrait de l'élément de l'accessoire de hachage à vis logé dans la dépression. Cette disposition simplifie aussi la réalisation du boîtier.

Selon une disposition avantageuse, le boîtier comporte un corps comprenant deux flancs latéraux reliés par la paroi extérieure. La ou les conformations ainsi que la dépression peuvent alors notamment être ménagées sur une face supérieure ou arrière du boîtier, la face avant du boîtier recevant l'accessoire de hachage à vis.

Avantageusement, la paroi extérieure forme un logement. En d'autres termes, la paroi extérieure présente une configuration concave, dans laquelle sont ménagées la ou les conformations ainsi que la dépression. Cette disposition contribue à renforcer la solidité du boîtier.

Avantageusement alors le logement est fermé par un capot. Le capot peut être formé par une simple paroi dépourvue de parois latérales.

Avantageusement encore le capot présente une forme en L. Cette disposition est particulièrement intéressante lorsque la dépression présente une ouverture frontale.

En alternative la paroi peut être fermée par un couvercle présentant des parois latérales de manière à former un logement pour les éléments placés sur ou dans la ou les conformations.

Selon une autre disposition de l'invention, la ou les conformations, d'une part, et la dépression, d'autre part, sont ménagées sur deux faces adjacentes du boîtier, par exemple la face supérieure et une face latérale, ou encore deux faces latérales adjacentes, par exemple la face arrière et un côté.

Selon une disposition avantageuse, la dépression est agencée longitudinalement par rapport au boîtier. Cette disposition permet de loger plus aisément un élément allongé de l'accessoire de hachage à vis.

L'invention sera mieux comprise à l'étude d'un exemple de réalisation et de deux variantes, pris à titre nullement limitatif, illustrés dans les figures annexées, dans lesquelles :
- la figure 1 est une vue en éclaté partiel d'un appareil électroménager de préparation culinaire équipé d'un accessoire de hachage à vis et de ses éléments associés,
- la figure 2 est une vue en coupe longitudinale non éclatée de l'appareil équipé montré à la figure 1,
- la figure 3 est une vue en coupe transversale d'une partie du boîtier de l'appareil montré aux figures 1 et 2, présentant plus particulièrement le logement prévu pour le rangement des éléments associés à l'accessoire de hachage à vis,
- la figure 4 est une vue partielle en coupe transversale d'une variante de réalisation de la partie du boîtier illustrée à la figure 3.
- la figure 5 est une vue partielle en perspective arrière plongeante d'une autre variante de réalisation du boîtier.

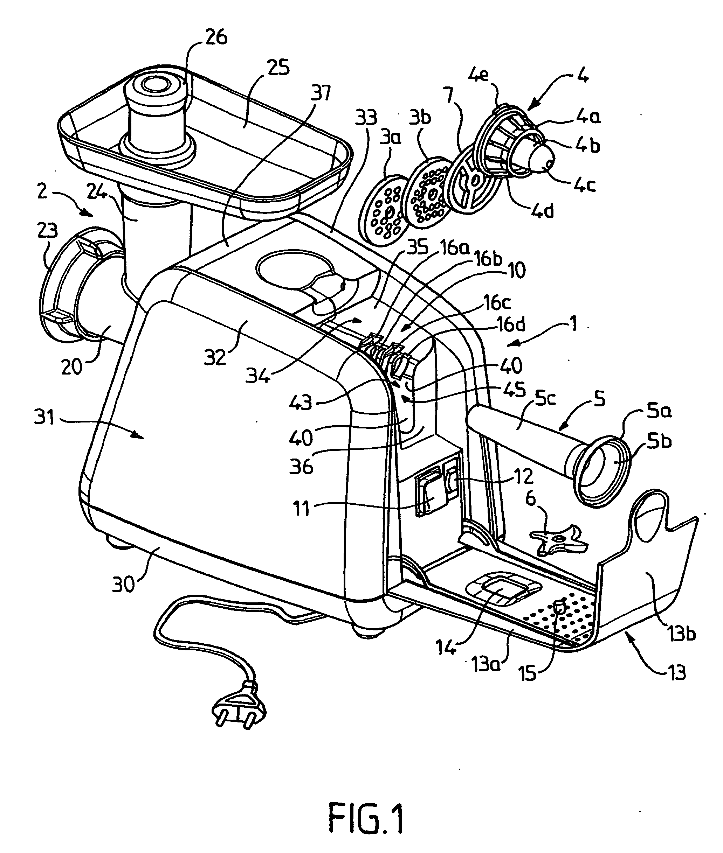

La figure 1 montre un appareil électroménager de préparation culinaire comportant un boîtier 1 sur lequel est monté un accessoire de hachage à vis 2. L'accessoire de hachage à vis 2 peut être utilisé avec un couteau 6 et une grille 3a ou une grille 3b, avec un accessoire à kebbé 4, ou encore avec un tube à saucisses 5 associé à un élément ajouré 7. Le boîtier 1 présente un logement 10 prévu pour recevoir les grilles 3a, 3b, l'accessoire à kebbé 4, l'élément ajouré 7 et le tube à saucisses 5.

Les grilles 3a, 3b présentent des ouvertures de différentes sections, afin de permettre la réalisation de préparations hachées plus ou moins finement.

L'accessoire à kebbé 4 comporte une couronne extérieure 4a montée autour d'un noyau central allongé 4b. Le noyau central 4b présente une extrémité 4c sortant de la couronne 4a. La couronne 4a présente un rétrécissement 4d à proximité de l'extrémité 4c afin de permettre l'extrusion de la pâte. A l'opposé du rétrécissement 4d la couronne 4 présente une collerette 4e prévue pour être montée dans l'accessoire 2 à la place des grilles 3a, 3b.

Le tube à saucisses 5 présente une collerette 5a prolongée après un rétrécissement 5b par un corps creux tronconique 5c. La collerette 5a est prévue pour être montée en association avec l'élément ajouré 7 dans l'accessoire 2 à la place de l'une des grilles 3a, 3b et du couteau 6, ou de la collerette 4e de l'accessoire à kebbé 4.

Deux interrupteurs 11, 12 sont montés sur une paroi latérale du boîtier 1. Le premier interrupteur 11 est prévu pour la mise en marche et l'arrêt du moteur de l'appareil logé dans le boîtier 1. Le premier interrupteur 11 peut être prévu pour occuper trois positions, une position d'arrêt et deux positions marche à des vitesses différentes. Le second interrupteur 12 est prévu pour inverser le sens de rotation du moteur, en cas de bourrage dans l'accessoire de hachage 2.

Un capot 13 ferme le logement 10. Le capot 13 est monté pivotant par rapport au boîtier 1. Le capot 13 présente une forme en L prévue pour couvrir au moins partiellement deux faces adjacentes du boîtier 1. Le capot 13 comporte une partie inférieure 13a prévue pour couvrir au moins partiellement la face arrière du boîtier 1. Le capot 13 comporte une partie supérieure 13b prévue pour couvrir au moins partiellement la face supérieure du boîtier 1. La partie inférieure 13a du capot 13 comporte une ouverture 14 prévue pour l'accès à l'interrupteur 11 marche/arrêt, l'utilisateur devant ouvrir le capot 13 pour accéder à l'interrupteur 12 permettant le fonctionnement en marche arrière. La partie inférieure 13a du capot 13 comporte sur sa face interne un ergot 15 prévu pour recevoir le couteau 6.

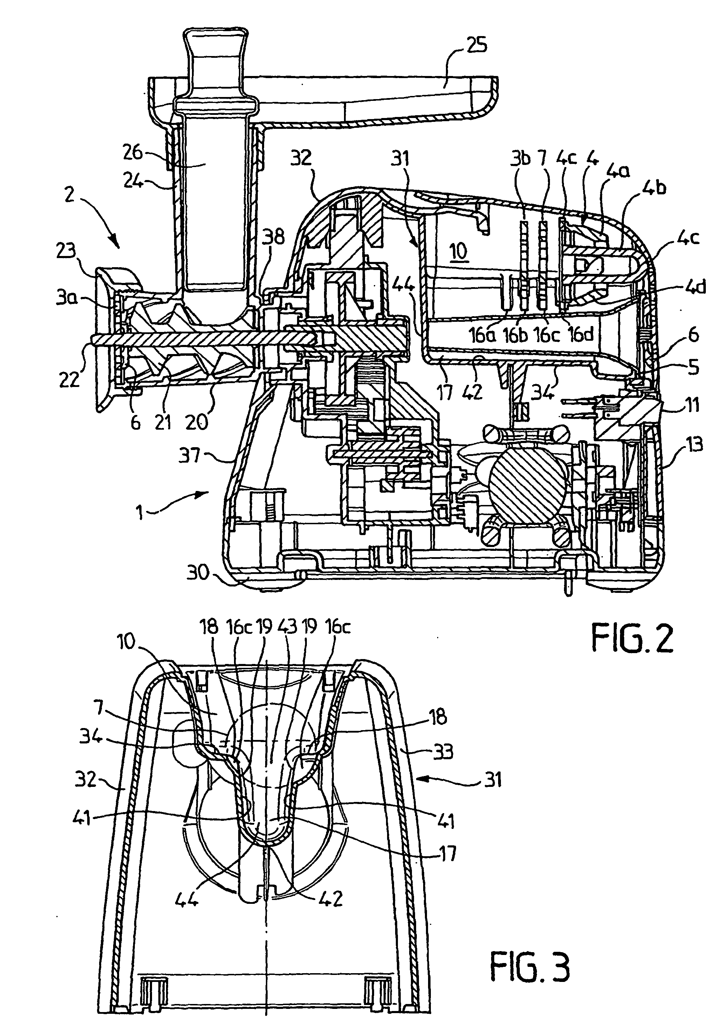

Tel que mieux visible à la figure 2, l'accessoire de hachage à vis 2 comporte un corps creux 20 tubulaire présentant une extrémité montée sur le boîtier 1. Une vis 21 montée sur un axe 22 est logée dans le corps creux 20. L'appareil est représenté en position de hachage. Le couteau 6 est monté dans le corps creux 20 sur l'extrémité libre de la vis 21. Un écrou 23 monté sur l'extrémité du corps creux 20 maintient la grille 3a contre le couteau 6. Le corps creux 20 présente une cheminée latérale 24 prévue pour l'introduction des aliments. Un plateau d'introduction 25 monté sur la cheminée 24 et un pilon 26 permettent de faciliter l'introduction des aliments dans la cheminée 24. Lors de la fabrication de saucisses, l'élément ajouré 7 et le tube à saucisses 5 sont montés à la place du couteau 6 et de la grille 3a. L'élément ajouré 7 permet de maintenir l'axe 22 de la vis 21.

Le boîtier 1 comporte un socle 30 sur lequel est monté un corps 31. Tel que montré aux figures, le corps 31 présente deux flancs latéraux 32, 33 reliés par une paroi 34. La paroi 34 forme une paroi extérieure du boîtier 1. La paroi 34 comporte une partie supérieure 35 prolongée par une partie latérale inférieure 36. Les autres côtés de la partie supérieure 35 sont relevés, de manière à former le logement 10 dans lequel sont rangés différents éléments de l'accessoire de hachage 2.

Un cache 37 couvre partiellement la partie avant du socle 31 entre les flancs 32, 33. Le cache 37 présente une ouverture 38 prévue pour le montage du corps creux 20 de l'accessoire de hachage 2. Le cache 37 couvre partiellement la partie supérieure avant du logement 10. Le capot 13 en position fermée se place entre les parties supérieures des flancs 32, 33 et ferme le logement 10.

La paroi 34 présente des conformations 16a, 16b, 16c, 16d délimitant partiellement des espaces de rangement prévus pour recevoir des éléments de l'accessoire de hachage 2 tels que les grilles 3a, 3b, l'élément ajouré 7 et la collerette 4e de l'accessoire à kebbé 4. Les conformations 16a, 16b, 16c, 16d sont agencées transversalement par rapport au boîtier 1. Les conformations 16a, 16b, 16c, 16d sont sensiblement parallèles. Pour une préhension plus aisée, les conformations 16a, 16b, 16c, 16d sont décalées latéralement de manière alternée, tel que mieux visible à la figure 1.

La paroi 34 présente une dépression 40 formant un autre espace de rangement prévu pour recevoir au moins partiellement un autre élément de l'accessoire de hachage 2 tel que le tube à saucisse 5.

La dépression 40 est agencée longitudinalement par rapport au boîtier 1. La dépression 40 présente deux parois latérales 41 longitudinales reliées par un fond 42. Les parois latérales 41 délimitent une ouverture supérieure 43 formée dans la partie supérieure 35 de la paroi 34. L'une des extrémités de la dépression 40 est fermée par une paroi latérale 44 transversale. L'autre extrémité de la dépression 40 présente une ouverture frontale 45 formée dans la partie latérale inférieure 36 de la paroi 34. La dépression 40 forme ainsi dans la paroi 34 une rainure ouverte à l'une de ses extrémités. L'ouverture supérieure 43 et l'ouverture frontale 45 forment une échancrure dans la partie supérieure 35 et la partie latérale inférieure 36 de la paroi 34.

La dépression 40 est ménagée entre la paroi 34 et les espaces de rangement définis par les conformations 16a, 16b, 16c, 16d. Chaque conformation 16a, 16b, 16c, 16d est séparée en deux parties par la dépression 40. Les conformations 16a, 16b, 16c, 16d sont concaves et forment une échancrure dans la paroi latérale 41 de la dépression 40. Chaque conformation 16a, 16b, 16c, 16d présente dans la paroi 34 une ouverture 18 prolongée par une ouverture latérale 19 ménagée dans l'une des parois latérales 41 de la dépression 40. La profondeur de la dépression 40 est supérieure à la profondeur des conformations 16a, 16b, 16c, 16d.

Le tube à saucisses 5 peut être retiré de la dépression 40 ou être mis en place dans la dépression 40 par l'ouverture frontale 45 sans déplacer les grilles 3a, 3b, ni l'élément ajouré 7, ni l'accessoire à kebbé 4.

En l'absence des grilles 3a, 3b, de l'élément ajouré 7 et de l'accessoire à kebbé 4, le tube à saucisses 5 peut être retiré de la dépression 40 ou être mis en place dans la dépression 40 en utilisant au moins partiellement l'ouverture supérieure 43.

La largeur des grilles 3a, 3b, de l'élément ajouré 7 et de l'accessoire à kebbé 4 étant inférieure à la longueur du tube à saucisses 5, l'ouverture supérieure 43 permet à l'utilisateur de vérifier d'un seul regard la présence ou l'absence d'un élément de l'accessoire de hachage 2 dans le boîtier 1.

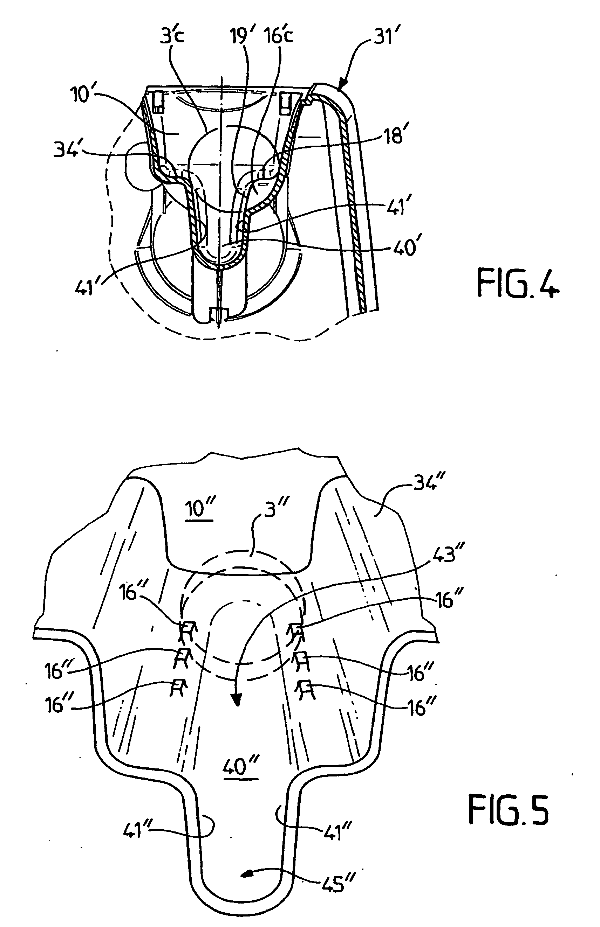

La figure 4 illustre une variante de réalisation différant de l'exemple de réalisation précédent en ce que la conformation 16'c est ménagée seulement dans l'une des parois latérales 41' de la dépression 40'. La conformation 16'c présente dans la paroi 34' une ouverture 18' prolongée par une ouverture latérale 19' ménagée dans l'une des parois latérales 41' de la dépression 40.

De ce fait, un élément de l'accessoire de hachage inséré dans la conformation 16'c prend appui contre la paroi latérale 41' de la dépression 40' opposée à la conformation 16'c. L'élément de l'accessoire de hachage est par exemple une grille 3'c.

La figure 5 illustre une autre variante de réalisation, dans laquelle la paroi 34" présente des conformations 16" proéminentes. Un espace de rangement pour une grille 3" ou un accessoire à kebbé est délimité par deux conformations 16" adjacentes situées d'un côté de la dépression 40" et deux autres conformations 16" adjacentes situées de l'autre côté de la dépression 40". Trois conformations 16" de chaque côté de la dépression 40" permettent de former deux espaces de rangement. Les conformations 16" sont agencées sur la paroi 34" à distance de la dépression 40". De ce fait, les parois latérales 41" de la dépression 40" sont dépourvues d'échancrures.

A titre de variante, le pilon 26 pourrait être rangé dans la dépression 40, 40', 40" en complément ou en substitution au tube à saucisses 5. Le pilon 26 ou le tube à saucisses 5 n'est pas nécessaire logé entièrement dans la dépression et peut notamment dépasser par l'ouverture frontale de la dépression.

A titre de variante la paroi extérieure 34 n'est pas nécessairement fermée par un capot. Le boîtier peut être dépourvu de capot fermant le logement, ou peut au contraire comporter plusieurs capots.

A titre de variante, le logement 10, 10', 10" n'est pas nécessairement ménagé sur les faces supérieure et arrière du boîtier 1. Le logement peut notamment être ménagé sur une face latérale et sur face supérieure, ou sur une face latérale du boîtier et la face arrière.

A titre de variante la paroi extérieure 34 ne ménage pas nécessairement un logement.

A titre de variante, la paroi extérieure 34 n'est pas nécessairement réalisée en une seule pièce.

A titre de variante, un montant peut séparer l'ouverture supérieure 43 de l'ouverture frontale 45.

A titre de variante, la dépression 40, 40', 40" ne comporte pas nécessairement d'ouverture frontale 45.

La présente invention n'est nullement limitée à l'exemple de réalisation décrit et à ses variantes, mais englobe de nombreuses modifications dans le cadre des revendications.

## Revendications

1. Boîtier (1) d'appareil électroménager de préparation culinaire prévu pour recevoir un accessoire de hachage à vis (2), comportant une paroi extérieure (34 ; 34' ; 34") présentant au moins une conformation (16a, 16b, 16c, 16d ; 16'c ; 16") délimitant partiellement un espace de rangement prévu pour recevoir un premier élément de l'accessoire de hachage à vis (2), la paroi extérieure (34 ; 34' ; 34") présentant une dépression (40 ; 40' ; 40") prévue pour recevoir au moins partiellement un deuxième élément de l'accessoire de hachage à vis (2), la dépression (40 ; 40' ; 40") étant ménagée entre la paroi extérieure (34 ; 34' ; 34") et l'espace de rangement, **caractérisé en ce que** la dépression (40) présente une ouverture supérieure (43) et une ouverture frontale (45).

2. Boîtier selon la revendication 1, **caractérisé en ce que** ledit espace de rangement est défini par au moins deux conformations (16a, 16b, 16c, 16d ; 16") disposées de part et d'autre de la dépression (40 ; 40").

3. Boîtier selon l'une des revendications 1 ou 2, **caractérisé en ce que** la ou l'une des conformations (16a, 16b, 16c, 16d ; 16'c) forme une échancrure dans une paroi latérale (41 ; 41') de la dépression (40 ; 40').

4. Boîtier selon l'une des revendications 1 à 3, **caractérisé en ce que** les conformations (16a, 16b, 16c, 16d ; 16") délimitent partiellement plusieurs espaces de rangement et **en ce que** la dépression (40 ; 40") est ménagée entre la paroi extérieure (34 ; 34") et lesdits espaces de rangement.

5. Boîtier selon l'une des revendications 1 à 4, **caractérisé en ce que** l'ouverture frontale (19) prolonge l'ouverture supérieure (18).

6. Boîtier selon l'une des revendications 1 à 5, **caractérisé en ce que** le boîtier (1) comporte un corps (31) comprenant deux flancs latéraux (32, 33) reliés par la paroi extérieure (34).

7. Boîtier selon l'une des revendications 1 à 6, **caractérisé en ce que** la paroi extérieure (34 ; 34' ; 34") forme un logement (10 ; 10' ; 10").

8. Boîtier selon la revendication 7, **caractérisé en ce que** le logement (10) est fermé par un capot (13).

9. Boîtier selon la revendication 8, **caractérisé en ce que** le capot (13) présente une forme en L.

10. Boîtier selon l'une des revendications 1 à 9, **caractérisé en ce que** la dépression (40) est agencée longitudinalement par rapport au boîtier.

## Claims

1. A case (1) for a home electrical appliance for preparing food and that is designed to receive a screw chopper accessory (2), the case having an outer wall (34; 34'; 34") presenting at least one shape (16a, 16b, 16c, 16d; 16'c; 16") defining part of a storage space for receiving a first element of the screw chopper/mincer accessory (2), the outer wall (34; 34'; 34") presenting a depression (40; 40'; 40") for receiving at least part of a second element of the screw chopper/mincer accessory (2), the depression (40; 40'; 40") being formed between the outer wall (34; 34'; 34") and the storage space, the case being **characterized in that** the depression (40) presents a top opening (43) and a front opening (45).

2. A case according to claim 1, **characterized in that** said storage space is defined by at least two shapes (16a, 16b, 16c, 16d; 16") disposed on either side of the depression (40; 40").

3. A case according to claim 1 or claim 2, **characterized in that** the or one of the shapes (16a, 16b, 16c, 16d; 16'c) forms a notch in a side wall (41; 41') of the depression (40, 40').

4. A case according to any one of claims 1 to 3, **characterized in that** the shapes (16a, 16b, 16c, 16d; 16") define portions of a plurality of storage spaces, and **in that** the depression (40; 40") is formed between the outer wall (34; 34") and said storage spaces.

5. A case according to any one of claims 1 to 4, **characterized in that** the front opening (19) extends the top opening (18).

6. A case according to any one of claims 1 to 5, **characterized in that** the case (1) includes a body (31) having two side flanks (32, 33) interconnected by the outer wall (34).

7. A case according to any one of claims 1 to 6, **characterized in that** the outer wall (34; 34'; 34") forms a housing (10; 10'; 10").

8. A case according to claim 7, **characterized in that** the housing (10) is closed by a cap (13).

9. A case according to claim 8, **characterized in that** the cap (13) is L-shaped.

10. A case according to any one of claims 1 to 9, **characterized in that** the depression (40) is arranged longitudinally relative to the case.

## Patentansprüche

1. Gehäuse (1) für eine Elektro-Küchenmaschine zum Zubereiten von Nahrungsmitteln, das dazu vorgesehen ist, eine Fleischwolfvorrichtung (2) aufzunehmen, mit einer Außenwand (34; 34'; 34"), die zumindest eine Anformung (16a, 16b, 16c, 16d; 16'c; 16") aufweist, welche teilweise einen Stauraum begrenzt, der dazu vorgesehen ist, ein erstes Element der Fleischwolfvorrichtung (2) aufzunehmen, wobei die Außenwand (34; 34'; 34") eine Vertiefung (40; 40'; 40") aufweist, die dazu vorgesehen ist, zumindest teilweise ein zweites Element der Fleischwolfvorrichtung (2) aufzunehmen, wobei die Vertiefung (40;: 40'; 40") zwischen der Außenwand (34; 34'; 34") und dem Stauraum ausgeführt ist, **dadurch gekennzeichnet, dass** die Vertiefung (40) eine obere Öffnung (43) und eine stirnseitige Öffnung (45) aufweist.

2. Gehäuse nach Anspruch 1, **dadurch gekennzeichnet, dass** der genannte Stauraum von zumindest zwei Anformungen (16a, 16b, 16c, 16d; 16") definiert wird, die beiderseits der Vertiefung (40; 40") angeordnet sind.

3. Gehäuse nach einem der Ansprüche 1 oder 2, **dadurch gekennzeichnet, dass** die bzw. eine der Anformungen (16a, 16b, 16c, 16d; 16'c) eine Aussparung in einer Seitenwand (41; 41') der Vertiefung (40; 40') bildet.

4. Gehäuse nach einem der Ansprüche 1 bis 3, **dadurch gekennzeichnet, dass** die Anformungen (16a, 16b, 16c, 16d; 16") mehrere Stauräume teilweise begrenzen und dass die Vertiefung (40; 40") zwischen der Außenwand (34; 34") und den genannten Stauräumen ausgeführt ist.

5. Gehäuse nach einem der Ansprüche 1 bis 4, **dadurch gekennzeichnet, dass** die stirnseitige Öffnung (19) die obere Öffnung (18) fortsetzt.

6. Gehäuse nach einem der Ansprüche 1 bis 5, **dadurch gekennzeichnet, dass** das Gehäuse (1) einen Körper (31) mit zwei Seitenflanken (32, 33) enthält, die über die Außenwand (34) verbunden sind.

7. Gehäuse nach einem der Ansprüche 1 bis 6, **dadurch gekennzeichnet, dass** die Außenwand (34; 34'; 34") eine Aufnahmemulde (10; 10'; 10") bildet.

8. Gehäuse nach Anspruch 7, **dadurch gekennzeichnet, dass** die Aufnahmemulde (10) von einer Haube (13) verschlossen wird.

9. Gehäuse nach Anspruch 8, **dadurch gekennzeichnet, dass** die Haube (13) eine L-Form aufweist.

10. Gehäuse nach einem der Ansprüche 1 bis 9, **dadurch gekennzeichnet, dass** die Vertiefung (40) in Längsrichtung zum Gehäuse angeordnet ist.
